# EUROPÄISCHE PATENTSCHRIFT

(11) **EP 2 045 073 B1**
(45) Veröffentlichungstag und Bekanntmachung des Hinweises auf die Patenterteilung: **30.05.2018**
(21) Anmeldenummer: 08015891.8
(22) Anmeldetag: 10.09.2008
(51) Int. Cl.: B32B 27/00, B32B 7/02, B32B 23/06, B32B 23/08, B32B 27/08, B32B 27/10, B32B 27/30, B65D 81/26, B65D 65/46, B65D 65/40

(54) **Feuchtigkeitsabsorbierende Mehrschichtfolien und daraus hergestellte Verpackungen**
Moisture-absorbing multi-layer films and packaging made from same
Feuilles multicouches absorbant l'humidité et emballages fabriqués à partir de celles-ci

(30) Priorität: 13.09.2007 DE 102007043773
(43) Veröffentlichungstag der Anmeldung: 08.04.2009
(73) Patentinhaber: Wipak Walsrode GmbH & Co. KG, 29656 Walsrode (DE)
(72) Erfinder: Kaeding-Koppers, Annettl, Dr., 29683 Bad Fallingbostel (DE); Koppers, Markus, Dr., 29683 Bad Fallingbostel (DE); Richards, Jaquie, 29683 Visselhövede (DE); Janssen, Susan, 6471 JM Eygelshoven (NL)
(74) Vertreter: Kutzenberger Wolff & Partner

(56) Entgegenhaltungen:
- EP-A- 0 520 509
- EP-A- 1 072 657
- EP-A- 1 238 795
- EP-A1- 2 532 514
- WO-A-00/12627
- WO-A-01/66656
- WO-A-01/66661
- WO-A-2007/092394
- WO-A2-2009/024876
- DE-A1-102005 051 640
- US-A1- 2006 135 668
- US-B1- 6 200 404

## Beschreibung

Die vorliegende Erfindung betrifft eine thermoformbare Mehrschichtfolie umfassend einen Schichtverbund gemäß Anspruch 1 und daraus hergestellte Verpackungen, insbesondere Verpackungen für Lebensmittel.

Es ist gängige Praxis feuchtigkeitshaltige Lebensmittel wie z. B. Fleisch, Geflügel oder Schinken, die während ihrer Lagerung Feuchtigkeit, insbesondere wässrige Flüssigkeiten, abgeben, in Kunststoffverpackungen abzupacken und so dem Endverbraucher anzubieten. Darüber hinaus ist es auch gängige Praxis, Produkte, insbesondere Süßigkeiten, wie z. B. schokoladehaltige oder schokoladeüberzogene Produkte, die feuchtigkeitsempfindlich sind, in Kunststoffverpackungen zu lagern. Durch die Einwirkung von Feuchtigkeit kommt es insbesondere bei diesen Produkten nicht nur durch Bildung eines Grauschleiers zu einer Veränderung ihres Aussehens, sondern auch zu einer Geschmacksbeeinträchtigung.

Um die Beeinträchtigung der verpackten Produkte durch Abgabe von wässriger Flüssigkeit zu mindern bzw. zu vermeiden und eine dabei gegebenenfalls auch auftretende Geschmacksbeeinträchtigung zu unterbinden, wurde bereits gemäß dem Stand der Technik versucht, Feuchtigkeits-absorbierende Verpackungen zur Verfügung zu stellen.

So wird in EP-A-0520509 eine Verpackungsmulde als ein Verpackungselement einer Kunststoffverpackung offenbart, die aus einer Mehrschichtfolie umfassend eine Schicht mit hoher Feuchtigkeitsabsorption besteht. Diese innenliegende, absorbierende Schicht ist mit einer heißsiegelbaren Oberflächenschicht direkt oder indirekt verbunden. Damit die Feuchtigkeit durch diese heißsiegelbare Schicht in den Folienverbund überhaupt eindringen kann, muss diese Schicht durch mechanische Einwirkung mit einer hohen Zahl von Perforationen ausgestattet werden. Damit erhält die heißsiegelbare Schicht die notwendige Porosität zum Eindringen von Feuchtigkeit, insbesondere von wässrigen Flüssigkeiten. Diese notwendigen Perforationen können aber auch zu einer Beeinträchtigung der Festigkeit der Mehrschichtfolie und darüber hinaus auch zu einer erheblichen Beeinträchtigung der Siegelfestigkeit der Siegelnaht zwischen einer so ausgerüsteten Verpackungsmulde und dem zweiten Verpackungselement, vorzugsweise einer Deckelfolie führen. Insbesondere die hohe Porosität der heißsiegelbaren Schicht der Verpackungsmulde erhöht drastisch die Gefahr von Undichtigkeiten wie Kanülen im Bereich der Siegelnaht, was zwangsläufig zu einer Beeinträchtigung der Lagerfähigkeit des verpackten Gutes führt. Verpackungselemente, insbesondere Verpackungsmulden, die nach dem in der EP-A-0520509 beschriebenen Prinzip zur Feuchtigkeitsabsorption ausgerüstet sind, werden auch in EP-A-1238795 offenbart. Auch bei den dort beschriebenen Verpackungen besteht die Gefahr von Undichtigkeiten im Siegelnahtbereich wegen der durch mechanische Einwirkung erzeugten hohen Porosität der Heißsiegelschicht für die Durchlässigkeit der in der Verpackung befindlichen Feuchtigkeit. Dies gilt auch für das Verpackungsmaterial, das in US 2006/135668 offenbart ist und u. a. durch mechanische Einwirkung, wie Recken, vom Nucleirungsmittel enthaltenen Polymerbeschichtungen, die für eine Wasserdampfdurchlässigkeit erforderliche Porenbildung aufweist. In DE-A-102005051640 wird ein Verpackungsbeutel für Schokoladewaren beschrieben, der aus einer Mehrschichtfolie hergestellt wurde. Diese Mehrschichtfolie enthält eine innenliegende Feuchtigkeits-absorbierende Polymerschicht, die bis zu 20 Gew.% eines superabsorbierenden Polymeren enthalten kann. Dadurch und durch das Vorhandensein einer Heißsiegelschicht aus üblichen heißsiegelbaren Polymeren, wie z. B. Polyolefinen, die geringe Wasserdampfdurchlässigkeit aufweisen, ist das Wasseraufnahmevermögen auf maximal 10g/m² beschränkt, wobei nicht nur die Menge an Feuchtigkeits-absorbierenden Polymeren in der entsprechenden Feuchtigkeits-absorbierenden Polymerschicht die Wasseraufnahme steuert, sondern auch die relativ geringe Diffusionsgeschwindigkeit von Wasserdampf durch die Siegelschichtmaterialien. Für einen Fachmann ist daraus klar erkennbar, dass solche Mehrschichtfolie nur äußerst begrenzte Einsatzmöglichkeiten zur Verpackung von Gütern haben, die Feuchtigkeit abgeben und/oder deren Geschmack und Aussehen durch Feuchtigkeit bei der Lagerung beeinträchtigt werden.

Diese Beeinträchtigungen der Einsatzmöglichkeiten sind auch bei einer Verwendung eines Schichtmaterials umfassend unmodifizierte Stärke - wie in US 6,200,404 B beschrieben - zu erwarten.

Außerdem ist weder in WO 01/66661 A noch in WO 2009/024876 A2 eine feuchtigkeits-absorbierende Mehrschichtfolie mit einem Schichtaufbau bzw. einem entsprechenden Eigenschaftsprofil offenbart, die eine notwendige Anpassung an unterschiedlichen, von Feuchtigkeit zu schützenden, Verpackungsgütern, insbesondere Lebensmitteln erlaubt.

Dies gilt auch für das u. a. in WO 2007/092394 A beschriebene PLA-beschichtete Papier oder das in US 4,622,161 als nicht thermoformbares aufgeführte Laminat.

Gegenüber dem zitierten Stand der Technik war daher die Aufgabe zu lösen, ein Feuchtigkeits-absorbierendes Verpackungsmaterial in Form einer entsprechenden Feuchtigkeits-absorbierenden Mehrschichtfolie zur Verfügung zu stellen, aus der Verpackungen mit einer entsprechen dem verpackten Gut beliebig steuerbaren Wasseraufnahmekapazität hergestellt werden können, deren Lagerstabilität nicht durch eine Schwächung wie z. B. eine durch mechanische oder andersartige Einwirkung verursachte Porosität der Siegelschicht beeinträchtigt ist.

Diese erfindungsgemäße Aufgabe wird durch das zur Verfügung stellen einer thermoformbaren Mehrschichtfolie, umfassend einen Schichtverbund aus
a) mindestens einer ggf. mehrlagigen Schicht mit einer Wasseraufnahmekapazität von wenigstens 20g/m² basierend auf wenigstens einem Feuchtigkeits-absorbierenden Kunststoffmaterial und
b) einer Feuchtigkeits-durchlässigen, heißsiegelfähigen Oberflächenschicht basierend auf wenigstens einem biologisch abbaubaren Polymeren, dadurch gekennzeichnet, dass die Feuchtigkeitsdurchlässigkeit der Schicht b) nicht auf einer Schwächung der Schicht b) beruht und
der Anteil des biologisch abbaubaren Polymeren in der Feuchtigkeitsdurchlässigen Schicht b) mindestens 70 Gew.% beträgt und so hoch ist, dass die Schicht b) eine Wasserdampfdurchlässigkeit von wenigstens 100 g / m²·d (23 C°/90 % r. F.) (gemessen nach ASTM F 1249) aufweist,
gelöst.

Die heißsiegelbare, Feuchtigkeits-durchlässige Oberflächenschicht b) ist nicht geschwächt wie z. B. porös, d. h. sie wurde keiner irgendwie gearteten mechanischen oder elektrischen Bearbeitung, die zu einer Perforation, vorzugsweise Mikroperforation führt, zur Erhöhung der Feuchtigkeitsdurchlässigkeit unterworfen, um die notwendige Wasserdampfdurchlässigkeit von wenigstens 100g/m²·d, besonders bevorzugt von wenigstens 150g/m²·d (23°C/90% r. F., 30 µm Schichtdicke) gemessen nach ASDM F 1249 zu erzielen.

Diese notwendige Durchlässigkeit zum Abtransport der Feuchtigkeit aus einer aus der erfindungsgemäßen Mehrschichtfolie hergestellten Verpackung zur Aufnahme in der Feuchtigkeits-absorbierenden Schicht a) beruht im Wesentlichen auf der Verwendung von wenigstens einem biologisch abbaubaren Polymeren, das die vorstehend aufgeführte Wasserdampfdurchlässigkeit bei den genannten Bedingungen aufweist, zur Herstellung der Schicht b). Ein solches Polymer ist in der Schicht b) zu zumindest 70 Gew.% und in mindestens einem so großen Gewichtsanteil vorhanden, dass die Feuchtigkeitsdurchlässigkeit der heißsiegelbaren Schicht b) bei der jeweiligen Schichtdicke so hoch ist, dass die Schicht eine Wasserdampfdurchlässigkeit von wenigstens 100g/m².d, besonders bevorzugt wenigstens 150g/m²·d (23°C/90% r. F.) aufweist. Vorzugsweise ergeben die für den Aufbau der Schicht b) verwendeten biologisch abbaubaren Polymeren nicht nur die Wasserdampfdurchlässigkeit mindestens in dem geforderten Ausmaß, sondern auch die notwenigen Heißsiegelfähigkeit bei üblichen Siegeltemperaturen zwischen 80 °C und 200 °C mit einer ausgezeichneten Heißsiegelstärke von vorzugsweise mindestens 1,5N/15mm gemessen nach DIN 55529. Durch den Einsatz biologisch abbaubarer Polymere gelingt es daher, die erfindungsgemäßen Mehrschichtfolien mit einer multifunktionellen Oberflächenschicht auszurüsten, die die notwendige Wasserdampfdurchlässigkeit, Heißsiegelbarkeit mit ausgezeichneter Siegelfestigkeit und Homogenität der physikalischen Eigenschaften über die gesamte Schichtdicke gewährleistet.

Da die zum Einsatz kommenden biologisch abbaubaren Polymeren selbst die notwendige Feuchtigkeits-durchlässigkeit garantieren, erübrigt es sich auch, die sonst üblicherweise zum Einsatz kommenden, Feuchtigkeits-undurchlässigen, heißsiegelbaren Polymeren, wie z. B. Polyolefine, mit superabsorbierenden Polymeren zum Abtransport der Feuchtigkeit aus dem Verpackungsinneren zu dotieren, wodurch zumindest im Siegelbereich keine Gefahr der Aufnahme von Feuchtigkeit und entsprechender Quellung mit den damit verbundenen Undichtigkeiten gegeben ist.

Zum Aufbau der Schicht b), die eine der Oberflächenschichten und auch heißsiegelbar ist, eignen sich bevorzugt wenigstens ein biologisch abbaubares Polymeres ausgewählt aus der Gruppe umfassend Milchsäure-Homopolymere, Milchsäure-Copolymere jeweils basierend auf L-Lactid und/oder D-Lactid, Polyhydroxyalkanoate (PHA), Cellulose, Cellulose-Derivate, thermoplastische Stärke, Polycaprolactone und Polyvinylalkohole und Copolymere aus wenigstens 2 der genannten Polymeren.

Vorzugsweise eignen sich als biologisch abbaubare Polymere Milchsäure-HomoPolymere und/oder Milchsäure-Copolymere basierend auf L-Lactid und/oder D-Lactid und ggfs. ε-Caprolacton, Polyhydroxybutyrate (PHB), Celluloseacetate, Cellulosehydrate (Zellglas), Poly-ε-Caprolactone, Polyvinylalkohole, deren Mischungen oder Copolymere.

Erfindungsgemäß werden unter biologisch abbaubaren Kunststoffen solche Biokunststoffe verstanden, die kompostierbar sind, d. h. unter geeigneten Bedingungen in einem bestimmten Zeitraum über mehrere Monate (vorzugsweise 8 bis 12 Wochen) vollständig abgebaut werden.

Die heißsiegelbare Oberflächenschicht b) kann neben den genannten, biologisch abbaubaren Kunststoffen, gegebenenfalls zur Erzielung einer besseren thermoplastischen Verarbeitbarkeit, verbesserten Heißsiegelfähigkeit und/oder Kontrolle der Wasserdampfdurchlässigkeit mit nicht biologisch abbaubaren, synthetischen, thermoplastischen Polymeren in einer Menge bis zu 30 Gew.%, bezogen auf den gesamten Polymeranteil der Schicht b), abgemischt werden. Vorzugsweise eignen sich dafür nicht biologisch abbaubare, synthetische, thermoplastische Polymere wie aliphatische Polyester, Polyesteramide, Polyamide, vorzugsweise aliphatische Polyamide, oder eine Mischung von wenigstens zwei der genannten thermoplastischen Polymeren. Unter anderem wird vorzugsweise Stärke mit wenigstens einem dieser Polymeren, vorzugsweise einem Polyester, besonders bevorzugt einen aliphatischen Polyether, zur Verarbeitung gemischt. Besonders bevorzugt besteht die Feuchtigkeits-durchlässige, heißsiegelbare Oberflächenschicht b) aus einer Polymilchsäure (= Polylactid=PLA), die heißsiegelbar und biologisch abbaubar ist.

Die Dicke der feuchtigkeitsdurchlässigen Schicht b) wird im Wesentlichen von der vorstehend aufgeführten Wasserdampfdurchlässigkeit bestimmt. Vorzugsweise liegt **sie zwischen 5 bis 50 µm, besonders bevorzugt zwischen 10 und 20 µm).**

Der Schichtverbund der erfindungsgemäßen Mehrschichtfolie kann vorzugsweise die Schicht a) basierend auf einem Feuchtigkeits-absorbierenden Kunststoffmaterial innenliegend aufweisen, wobei die Schicht auch mehrlagig, vorzugsweise zwei-lagig sein kann.

Vorzugsweise basiert diese Schicht a) auf wenigstens einem Feuchtigkeits-absorbierenden Kunststoffmaterial ausgewählt aus der Gruppe umfassend vernetzte Alkylenimin-Homopolymere, vernetzte Alkylenimin-Copolymere, superabsorbierende Polymere, vorzugsweise superabsorbierende Acrylharze und deren Mischungen.

Als superabsorbierendes Polymeres kann wenigstens ein Acrylharz ausgewählt aus der Gruppe umfassend Poly(meth)acrylsäure, die vorzugsweise zumindest teilweise als anorganisches Salz, vorzugsweise Alkalimetallsalz, besonders bevorzugt Natriumsalz, vorliegt, Copolymerisate von (Meth)acrylsäureestern und (Meth)acrylsäure und/oder deren anorganischen Salze, vorzugsweise als Alkalimetallsalze, besonders bevorzugt als Natriumsalz, Copolymerisate von Vinylalkohol und (Meth)acrylsäure und/oder deren anorganischen Salze, vorzugsweise Alkalimetallsalze, besonders bevorzugt Natriumsalz. Weiterhin können als Feuchtigkeits-absorbierende Polymere Copolymerisate von Isobutylen-Maleinsäure und/oder deren anorganischen Salze, vorzugsweise Alkalimetallsalze, **besonders bevorzugt Natriumsalz, Cellulosederivate, vorzugsweise** Natriumcarboxymethylcellulose, Polyvinylpyrrolidone, Stärke gepropft mit Acrylnitril oder mit Acrylsäure, Polyvinylamine und deren Mischungen eingesetzt werden.

Sofern Acrylsäureharze als superabsorbierende Polymere eingesetzt werden und die entsprechenden Polymere zumindest teilweise als anorganische Salze vorliegen, sind die Natriumsalze bevorzugt.

Die bevorzugt geeigneten Feuchigkeits-absorbierenden, vernetzten Alkylenimin-Homo- oder Copolymere sind vorzugsweise vernetzte Ethylenimin-Homo- oder Copolymere.

Diese Polymeren sind marktgeführte Produkte, wie z. B. Lupasol® der BASF AG, die ein Molekulargewicht von 1.000 bis 5.000.000, vorzugsweise 2.000 bis 3.000.000 aufweisen. Diese Polyalkylenimine, vorzugsweise Polyethylenimine, sind bevorzugt mit bi- oder polyfunktionellen Vernetzern, die als funktionelle Gruppen wenigstens eine Glycidyl-, Aziridin-, Isocyonat-Gruppe oder ein Halogenatom aufweisen, wie z. B. Epichlorhydrin, Bichlorhydrinether von Polyalkylenglycol oder Aziridin, vernetzt.

Die Copolymere von Alkylenimin vorzugsweise Ethylenimin sind vorzugsweise multifunktionelle Alkylenpolyamine wie z. B. Ethylendiamin, Proylendiamin, Diethylentriamin, Triethylentetraamin, Dipropylentriamin, Dihexamethylentriamin, Aminopropylethyldiamin. Auch diese Copolymeren sind durch Mitverwendung der bereits aufgeführten multifunktionellen Vernetzer vernetzt. Darüber hinaus können die Polyalkylenimine, vorzugsweise Polyethylenimine, amidiert werden, indem die Polymeren mit Carboxylgruppen aufweisenden Säuren, deren Ester, Anhydride oder Säurechloride zu Amiden umgesetzt werden, wobei bis zu 30% der Aminofunktionen der Polyalkylenimine als Amide vorliegen können. Die genannten Feuchtigkeits-absorbierenden Polymeren können auch nur als eine Lage der Schicht a) vorliegen.

Die Polyalkylenimine bzw. die entsprechenden Copolymeren können als wässrige **Dispersionen aufgetragen werden, die beim Trocknen zu der Feuchtigkeits-**absorbierenden Schicht a), oder entsprechenden Lage vernetzen oder endvernetzen.

Zum Auftrag können alle bekannten Beschichtungsverfahren angewendet werden. Anstelle einer wässrigen Dispersion kann für die Beschichtung auch eine Lösung der Polymeren in einem geeigneten Lösungsmittel eingesetzt werden. Bevorzugt ist ein wässriges System zum Auftrag. Darüber hinaus ist auch möglich, die Poylalkylenimine, vorzugsweise die Polyethylenimine oder deren Copolymerisate durch ein thermisches Auftragsverfahren wie durch eine Extrusion, Coextrusion oder eine Lamination mit den angrenzenden Schichten, vorzugsweise der Schicht b) zu verbinden. Beschichtungsverfahren eignen sich auch bei der Herstellung einer mehrlagigen Schicht a).

Die Feuchtigkeits-absorbierende Schicht a) kann auch auf einem superabsorbierenden Polymere, vorzugsweise einem superabsorbierenden Acrylharz, wie vorstehend aufgeführt, basieren. Solche wasserquellbaren, wasserunlöslichen Acrylharze können als superabsorbierende, teilchenförmige Polymere in eine Matrix aus einem thermoplastischen Polymeren eingebettet oder mit Hilfe eines thermoplastischen Polymeren zu einer Feuchtigkeits-absorbierenden Schicht verbunden, vorliegen.

Das teilchenförmige, superabsorbierende Acrylharz liegt vorzugsweise in Form eines fein verteilten Pulvers in der Matrix aus einem thermoplastischen Material vor, das vorzugsweise hydrophil ist und durch Extrusion verarbeitet werden kann. Als dafür geeignete Matrixpolymere können Polyvinylalkohole, Polyacrylsäuren, Mischungen oder Copolymerisate der genannten Polymeren bzw. der Monomeren, aus denen **diese Polymeren aufgebaut sind, verwendet werden. Sofern die teilchenförmigen, superabsorbierenden Acrylharze mit einem thermoplastischen, vorzugsweise polymeren Bindemittel,** verbunden werden sollen, können sie mit einem natürlichen oder synthetischen Latex wie einem Polyacrylat-, Ethylen/Vinylacetat-Copolymerisat-, Styrol-AcrylatCopolymerisat-, Polyvinylacetat-, Polystyrolbutaydien-Latex gegebenenfalls unter Zugabe von Vernetzern als Latexdispersion, vorzugsweise durch Sprühen oder Drucken auf die mit der Feuchtigkeits-absorbierende Schicht a) zu verbindenden Schicht b) aufgebracht werden.

Vorzugsweise beträgt das Gewichtsverhältnis des superabsorbierenden Polymeren zur Polymermatrix bzw. zu dem polymeren Bindemittel (Latex) 1:10 bis 10:1. Die teilchenförmigen, superabsorbierenden Acrylharze, gegebenenfalls in einer Matrix eingebettet, können nur als eine Lage der Schicht a) vorliegen.

Darüber hinaus ist es auch möglich, dass die Feuchtigkeits-absorbierende Schicht auf einem offen-porigen Polyolefin-Schaum, vorzugsweise einem offen-porigen Polyethylen-oder Polypropylen-Schaum basiert, sofern das Schaummaterial die Wasseraufnahmekapazität von wenigstens 20g/m² aufweist.

Die erfindungsgemäße Mehrschichtfolie weist eine Feuchtigkeits-absorbierende Schicht a) mit einer Wasseraufnahmekapazität von wenigstens 20g/m² auf.

Sofern der Schichtverbund aus der Schicht a) und der Schicht b) als Verpackungsmaterial für Lebensmittelverpackungen eingesetzt wird, sind die lebensmittelrechtlichen Bestimmungen für die zum Einsatz kommenden Schichtmaterialien zu beachten.

Der erfindungsgemäße Verbund ermöglicht es, durch die Auswahl des heißsiegelbaren, wasser(dampf)durchlässigen Polymeren für die Schicht b) und durch die Auswahl des Feuchtigkeits-absorbierenden Polymeren für die Schicht a) bzw. deren mehrlagen Schichtaufbau die notwendige Wasserdampfdurchlässigkeit bzw. Feuchtigkeitsaufnahmekapazität entsprechend der Feuchtigkeitsabgabe des verpackten Gutes zu steuern. Insbesondere gelingt dies, durch Auswahl eines entsprechenden Polymere mit der notwendigen Wasserdampfdurchlässigkeit, gegebenenfalls gemischt mit einem weiteren synthetischen vorstehend aufgeführten Polymeren, und eines Feuchtigkeits-absorbierenden Polymeren mit der notwendigen Aufnahmekapazität. Dadurch ist es möglich, praktisch für jeden Anwendungszweck entsprechende Verpackungsmaterialien zur Verfügung zu stellen. Auch durch die Variation der Schichtdicke b) und/oder a) und/oder den Aufbau der Schicht a) kann die Wasserdampfdurchlässigkeit und/oder die Feuchtigkeitsaufnahmekapazität in einfacher Art und Weise entsprechend dem Anwendungszweck variiert werden.

Der erfindungsgemäße Verbund weist vorzugsweise als Bestandteil einer Mehrschichtfolie noch weitere Schichten auf.

Vorzugsweise ist der erfindungsgemäße Mehrschichtverbund noch mit wenigstens einer weiteren Trägerschicht c) verbunden.

Diese Trägerschicht c) kann nicht nur zur Erhöhung der Festigkeit der erfindungsgemäßen Mehrschichtfolie, sondern auch als Wasserdampfsperrschicht dienen, um beim Einsatz der erfindungsgemäßen Mehrschichtfolie als Verpackungsmaterial die Feuchtigkeits-absorbierende Schicht von der Aufnahme von Feuchtigkeit aus der Umgebung einer Verpackung weitgehend zu schützen.

Vorzugsweise werden zur Herstellung der Trägerschicht c) thermoplastische Polymere eingesetzt wie Polyolefine, besonders bevorzugt Polyethylene oder Polypropylene, Polyester, besonders bevorzugt aliphatische oder aromatische Polyester, wie z. B. Polyethylentheraphtalat, oder Polyamide, besonders bevorzugt aliphatische, teilaromatische oder aromatische Polyamide. Besonders bevorzugt sind die aus wenigstens einem dieser thermoplastischen Polymeren hergestellten Trägerschichten c) metallisiert, besonders bevorzugt mit Aluminium, und/oder mit AlOx oder SiOx beschichtet oder mit Papier verbunden.

Vorzugsweise ist die Trägerschicht c) auf der zur Schicht a) des erfindungsgemäßen Schichtbaus näher liegenden Seite aufgebracht.

Je nach Schichtaufbau der Trägerschicht c) kann deren Dicke zwischen 10 und 100 µm, vorzugsweise 20 und 60 µm variieren.

Die erfindungsgemäße Mehrschichtfolie kann auch eine Gasbarriereschicht d), vorzugsweise als Sauerstoffsperrschicht aufweisen, die vorzugsweise zwischen der Trägerschicht c) und der Feuchtigkeits-absorbierenden Schicht a) angeordnet ist.

Die Gasbarriereschicht d) besteht bevorzugt aus einem Ethylen/ Vinylalkohol-Copolymerisat, das vorzugsweise durch Verseifung von einem Ethylen/Vinylacetatcopolymerisat hergestellt wurde, aus einem Polyvinylidenchlorid, einem Copolymeren von Vinylidenchlorid mit einem α-Olefin, einem Polyamid oder einer Mischung von wenigstens zwei der genannten Polymeren. Vorzugsweise basiert die Gasbarriereschicht d) auf einem Ethylen/Vinylalkohol-Copolymerisat oder einem Vinylidenchlorid-Copolymerisat.

Die Dicke der Gasbarriereschicht d) liegt vorzugsweise zwischen 4 und 20 µm, besonders bevorzugt zwischen 5 und 15 µm.

Gegebenenfalls können zwischen der Gasbarriereschicht d) und den jeweils angrenzenden Schichten in der erfindungsgemäßen Mehrschichtfolie auch bekannte Haftvermittlerschichten angeordnet sein.

Gegebenenfalls kann die erfindungsgemäße Mehrschichtfolie mindestens monoaxial, vorzugsweise biaxial orientiert sein.

Der erfindungsgemäße Verbund von Schicht a) und Schicht b) kann, wie vorstehend beschrieben, hergestellt werden. Ebenso ist es möglich, diesen Verbund zusammen mit den weiteren Schichten der erfindungsgemäßen Mehrschichtfolie durch Extrusion, vorzugsweise Coextrusion, Extrusionsbeschichtung oder Extrusionskaschierung herzustellen. Besonders bevorzugt ist hierfür ein Flachfolienextrusionsverfahren. Ebenso kann der erfindungsgemäße Verbund aus Schicht a) und Schicht b) auch mit Hilfe von Haftvermittlern oder Kaschierklebern mit der verbleibenden Schichtfolge der erfindungsgemäßen Mehrschichtfolie, die separat durch Extrusion, vorzugsweise Coextrusion, hergestellt wurde, verbunden werden. Darüber hinaus ist es auch möglich, den erfindungsgemäßen Verbund bzw. die erfindungsgemäße Mehrschichtfolie mit weiteren Substraten aus Papier, wie Pergamin-Papier, Gewebe und/oder Metall zu verbinden.

Die erfindungsgemäße Mehrschichtfolie ist vorzugsweise transparent, insbesondere wenn sie als Verpackungsmaterial eingesetzt wird, wobei sie auch mit geeigneten Pigmenten eingefärbt und/oder bedruckt werden kann.

Der erfindungsgemäße Schichtverbund aus Schicht a) und Schicht b), insbesondere die erfindungsgemäße Mehrschichtfolie umfassend diesen Schichtverbund, kann vorzugsweise für die Herstellung von mindestens einem Verpackungselement, vorzugsweise von kompletten Verpackungen für wässrige Flüssigkeiten bzw. Feuchtigkeits-abgebenden Lebensmitteln, wie Fleisch, Geflügel, Schinken, Pasteten, oder Verpackungsgütern, die selbst in Spulen gegen Feuchtigkeitseinwirkung empfindlich sind, verwendet werden. Insbesondere eignen sich die Folien zur Verpackung von Süßwaren mit einem außenliegenden Schokoladeanteil wie z. B. Bonbons, Pralinen, Schokoriegeln, Schokokeksen bzw. Backwaren mit jeder Art von Schokoladeglasur, Schokolade in jeder Form und Gestaltung wie Schokoladetafeln, Schokoladefiguren.

Zur Verpackung solcher Güter wird aus der erfindungsgemäßen Mehrschichtfolie zumindest ein Verpackungselement, das die abgegebene Feuchtigkeit aus dem Inneren der Verpackung absorbieren kann, wie eine Verpackungsmulde, hergestellt. Dabei ist die vorzugsweise heißsiegelbare Schicht b) immer als eine Schicht angeordnet, die als Oberflächenschicht dem Inneren der Verpackung, d. h. dem **verpackten Gut zugewandt, vorliegt.**

Aus der Mehrschichtfolie können durch Thermoverformung, vorzugsweise durch Tiefziehen, entsprechende Verpackungsbehälter, vorzugsweise Verpackungsmulden hergestellt werden, die mit üblichen, vorzugsweise transparenten, heißsiegelbaren Mehrschichtfolien, die vorzugsweise mit einer Wasserdampfsperrschicht ausgerüstet sind, durch Versiegeln verschlossen werden.

Vorzugsweise wird das erfindungsgemäß hergestellte, durch Thermoverformung zu einer Mulde verformte Verpackungselement durch eine Mehrschichtfolie durch Versiegeln verschlossen, die zumindest den erfindungsgemäßen Schichtverbund aus Schicht a) und Schicht b) umfasst. Besonders bevorzugt wird ein Verpackungsbehälter, der aus der erfindungsgemäßen Mehrschichtfolie hergestellt wurde, auch mit einer erfindungsgemäßen Mehrschichtfolie als Deckelfolie verschlossen.

Es ist aber auch möglich, eine übliche bekannte Mehrschichtfolie mit einer außenliegenden Wasserdampfsperrschicht und gegebenenfalls einer in der Mehrschichtfolie innen liegenden Gassperrschicht, vorzugsweise einer Sauerstoffbarriereschicht, und einer heißsiegelbaren Oberflächenschicht durch Thermoverformung, vorzugsweise durch Tiefziehen, zu einer Verpackungsmulde zu verformen und diese Verpackungsmulde nach dem Befüllen mit einer erfindungsgemäßen Mehrschichtfolie durch Versiegeln zu verschließen.

In einer weiteren bevorzugten Ausführungsform kann eine solche Verpackungsmulde auch mit einem erfindungsgemäßen Verbund aus der Schicht a) und der Schicht b) verbunden mit einem Substrat, das eine ausreichende Wasserdampfsperre aufweist, verschlossen werden.

Darüber hinaus ist es auch möglich, die erfindungsgemäße Mehrschichtfolie zur Herstellung eines Verpackungsbehälters, wie eines Beutels, zu verwenden, der nach dem Befüllen in üblicher Weise durch Versiegeln verschlossen wird.

Die erfindungsgemäßen Verpackungen, von denen zumindest ein Verpackungselement aus einem Verpackungsmaterial den erfindungsgemäßen Verbund aus der Schicht a) und der Schicht b) umfasst, ist immer dadurch gekennzeichnet, dass die Schicht b) als Oberflächenschicht zu dem verpackten Gut gerichtet ist.

Ein weiterer Gegenstand der vorliegenden Erfindung ist daher auch eine Verpackung, die wenigstens ein Verpackungselement aus einem Verpackungsmaterial umfassend die erfindungsgemäßen Schichtenverbund aus der **Schicht a) und b) aufweist, wobei vorzugsweise die gesamte Verpackung aus der erfindungsgemäßen Mehrschichtfolie besteht.**

Ein weiterer Gegenstand der vorliegenden Erfindung ist daher auch eine Verpackung, bei der die Verpackungsmulde und bevorzugt auch das zweite **Verpackungselement als Deckelfolie aus der erfindungsgemäßen Mehrschichtfolie besteht.**

Ein weiterer Gegenstand der Erfindung ist auch ein Verpackungsbeutel, der aus der erfindungsgemäßen Mehrschichtfolie hergestellt wurde.

### Beispiel:

a) Auf eine Zellglasfolienbahn wird in einer Beschichtungsanlage eine wässrige Lösung von Polyethylenimin (Luposol ® der BASF AG) aufgetragen und nach dem Trocknen der Polyethyleniminschicht mit einer Schicht aus Polyethylen durch Extrusion beschichtet. Die Mehrschichtfolie mit einer Gesamtschichtdicke von 80 µm, wovon die Zellglasschicht eine 30 µm Schichtdicke aufweist, hat eine Wasserdampfdurchlässigkeit von 360 g/m²·d.
b) Aus einer Mehrschichtfolie umfassend eine Schicht aus amorphen Polyethylenterephtalat (Dicke 339 µm), die mit einer heißsiegelbaren Schicht aus Zellglas mit einer Schichtdicke von 10 µm klebstoffkaschiert ist, wird in bekannter Weise durch Tiefziehen (Tiefziehverhältnis 1:2) eine Verpackungsmulde hergestellt. Die Dimension der Verpackungsmulde ist 15 cm Breite zu 20 cm Länge. Die Verpackungsmulde wird zur Hälfte mit Wasser gefüllt und durch Versiegeln des Randes der Verpackungsmulde mit der nach a) hergestellten Deckelfolie verschlossen, wobei die Zellglasschicht der Deckelfolie gegen die Zellglasschicht der Mulde bei 120 °C 1 sec Siegelzeit gesiegelt wird.

Vor dem Verschließen der Verpackungsmulde wurde das Gewicht der Verpackungsmulde mit Wasser gravimetrisch bestimmt. Nach dem Verschließen der Verpackungsmulde mit der Deckelfolie wurde die Verpackung bei 23 °C und 90 % r. F. 24 Stunden gelagert. Nach dieser Lagerzeit wurde der Deckel vom der Mulde entfernt und das Gewicht der mit Wasser befüllten Verpackungsmulde wieder bestimmt. Dabei ergab sich gegenüber dem ursprünglichen Gewicht ein Verlust von 10,8 g Wasser. Beim Wiegen des abgelösten Deckels konnte eine entsprechende Gewichtszunahme festgestellt werden.

## Patentansprüche

1. Thermoverformbare Mehrschichtfolie umfassend einen Schichtverbund aus
a) mindestens einer ggf. mehrlagigen Schicht mit einer Wasseraufnahmekapazität von wenigstens 20g/m² basierend auf wenigstens einem Feuchtigkeits-absorbierenden Kunststoffmaterial und
b) einer Feuchtigkeits-durchlässigen, heißsiegelfähigen Oberflächenschicht basierend auf wenigstens einem biologisch abbaubaren Polymeren,
**dadurch gekennzeichnet, dass** die Feuchtigkeitsdurchlässigkeit der Schicht b) nicht auf einer Schwächung der Schicht b) beruht und
der Anteil des biologisch abbaubaren Polymeren in der Feuchtigkeitsdurchlässigen Schicht b) mindestens 70 Gew.% beträgt und so hoch ist, dass die Schicht b) eine Wasserdampfdurchlässigkeit von wenigstens 100 g / m²·d (23 C°/90 % r. F.) (gemessen nach ASTM F 1249) aufweist.

2. Mehrschichtfolie nach Anspruch 1, **dadurch gekennzeichnet, dass** die Feuchtigkeits-absorbierende Schicht a) auf wenigstens einem vernetzten Alkylenimin-Homo- oder Copolymeren, bevorzugt auf wenigstens einem vernetzten Ethylenimin-Homo- oder Copolymeren, basiert.

3. **Mehrschichtfolie nach Anspruch 1, dadurch gekennzeichnet, dass das Feuchtigkeits-absorbierende Kunststoffmaterial der Schicht a) wenigstens ein superabsorbierendes Polymeres enthält.**

4. Mehrschichtfolie nach Anspruch 3, **dadurch gekennzeichnet, dass** das superabsorbierende Polymer wenigstens ein Polymer ausgewählt aus der Gruppe umfassend Poly(meth)acrylsäure, die zumindest teilweise als anorganisches Salz, vorzugsweise als Alkalimetallsalz vorliegt, Copolymerisate von (Meth)acrylsäureestern und (Meth)acrylsäure und/oder deren anorganischen Salze, vorzugsweise Alkalimetallsalze, Copolymerisate von Vinylalkohol und (Meth)acrylsäure und/oder deren anorganischen Salze, vorzugsweise Alkalimetallsalze, Copolymerisate von Isobutylen-Maleinsäure und/oder deren anorganischen Salze, vorzugsweise Alkalimetallsalze, Cellulosederivate, vorzugswese Natriumcarboxymethylcellulose, Polyvinylpyrrolidone, Stärke gepfropft mit Acrylnitril oder mit Acrylsäure, Polyvinylamine und deren Mischungen ist.

5. Mehrschichtfolie nach Anspruch 3 oder 4, **dadurch gekennzeichnet, dass** das superabsorbierende Polymere teilchenförmig in einer Polymermatrix eingebettet oder mit einem polymeren Bindemittel verbunden ist.

6. Mehrschichtfolie nach einem der Ansprüche 3 bis 5, **dadurch gekennzeichnet, dass** der Anteil des superabsorbierenden Polymeren zur Polymermatrix bzw. zum polymeren Bindemittel 1:10 bis 10:1 beträgt.

7. Mehrschichtfolie nach Anspruch 1, **dadurch gekennzeichnet, dass** die Feuchtigkeits-absorbierende Schicht a) auf verschäumten Polyolefinen, vorzugsweise verschäumten Polyethylenen oder Polypropylenen, basiert.

8. Mehrschichtfolie nach einem der Ansprüche 1-7, **dadurch gekennzeichnet, dass** die Feuchtigkeits-durchlässige Schicht b) auf wenigstens einem biologisch abbaubaren Polymeren ausgewählt aus der Gruppe umfassend Milchsäure-Homopolymere oder Milchsäure-Copolymere, Polyhydroxyalkanoate, Stärke, Cellulose, Cellulosederivate, Polycaprolactone und Polyvinylalkohole basiert.

9. Mehrschichtfolie nach einem der Ansprüche 1-8, **dadurch gekennzeichnet, dass** die Schicht b) bis zu 30 Gew.-%, bezogen auf das Gesamtgewicht der Schicht b), eines synthetischen, nicht biologisch abbaubaren Polymeren enthält.

10. Mehrschichtfolie nach einem der Ansprüche 1-9, **dadurch gekennzeichnet, dass** der Schichtenverbund noch mit wenigstens einer weiteren Trägerschicht c) verbunden ist, die vorzugsweise auf der zur Schicht a) des Schichtverbundes näher liegenden Seite aufgebracht ist.

11. Mehrschichtfolie nach Anspruch 10, **dadurch gekennzeichnet, dass** die Trägerschicht c) auf einem thermoplastischen Polymer, vorzugsweise einem wasserdampfsperrenden Polyolefin, einem Polyester oder Polyamid basiert und gegebenenfalls metallisiert, vorzugsweise mit Al, und/oder mit SiOx, AlOx oder Papier, beschichtet ist.

12. Mehrschichtfolie nach Anspruch 10 oder 11, **dadurch gekennzeichnet, dass** zwischen der Trägerschicht c) und Schicht a) eine Gasbarriereschicht d) angeordnet ist.

13. Mehrschichtfolie nach Anspruch 12, **dadurch gekennzeichnet, dass** die Gasbarriereschicht d) auf einem Ethylen/Vinylalkohol-Copolymerisat, auf einem Polyvinylidenchlorid, einem Copolymer von Vinylidencholrid, einem Polyamid oder einer Mischung von wenigstens zwei der genannten Polymeren beruht.

14. Mehrschichtfolie nach Anspruch 12 oder 13, **dadurch gekennzeichnet, dass** die Gasbarriereschicht d) jeweils über eine Haftvermittlerschicht mit der jeweils angrenzenden Schicht verbunden ist.

15. Mehrschichtfolie nach Anspruch 12-14, **dadurch gekennzeichnet, dass** die Gasbarriereschicht d) eine Sauerstoff- und Wasserdampfbarriereschicht ist.

16. Mehrschichtfolie nach einem der Ansprüche 1-15, **dadurch gekennzeichnet, dass** die Mehrschichtfolie biaxial orientiert ist.

17. Verpackungselement, das gegebenenfalls thermogeformt ist, aus einer Mehrschichtfolie gemäß einem der Ansprüche 1-16.

18. Verpackung aufweisend ein Verpackungselement nach Anspruch 17, **dadurch gekennzeichnet, dass** das Verpackungselement ein Verpackungsbeutel, eine Verpackungsmulde und/oder ein Verpackungsdeckel ist.

19. Eine Verpackung nach Anspruch 18, **dadurch gekennzeichnet, dass** die Verpackung ein Feuchtigkeits-abgebendes oder Feuchtigkeits-empfindliches Gut als verpacktes Gut enthält und die heißsiegelfähige Oberflächenschicht b) zum verpackten Gut gerichtet ist.

20. Eine Verpackung nach Anspruch 19, **dadurch gekennzeichnet, dass** das Feuchtigkeits-abgebende Gut ein Lebensmittel ist.

## Claims

1. Thermoformable multilayer film comprising a laminate made of
a) at least one layer which has a water-absorption capacity of at least 20 g/m² and is based on at least one moisture-absorbing plastics material and optionally has a plurality of sublayers, and
b) a moisture-permeable, heat-sealable surface layer based on at least one biodegradable polymer,
**characterized in that** the permeability of the layer b) to moisture does not derive from any weakening of the layer b), and
the proportion of the biodegradable polymer in the moisture-permeable layer b) is at least 70% by weight, and is sufficiently high to provide a water vapour transmission rate of at least 100 g/m²·d (23°C/90% r.h.) (measured in accordance with ASTM F1249) to the layer b) .

2. Multilayer film according to Claim 1, **characterized in that** the moisture-absorbing layer a) is based on at least one crosslinked alkyleneimine homo- or copolymer, preferably on at least one crosslinked ethyleneimine homo- or copolymer.

3. Multilayer film according to Claim 1, **characterized in that** the moisture-absorbing plastics material of the layer a) comprises at least one superabsorbent polymer.

4. Multilayer film according to Claim 3, **characterized in that** the superabsorbent polymer is at least one polymer selected from the group comprising poly(meth)acrylic acid which at least to some extent takes the form of inorganic salt, preferably of alkali metal salt, copolymers of (meth)acrylic esters and (meth)acrylic acid and/or inorganic salts thereof, preferably alkali metal salts, copolymers of vinyl alcohol and (meth)acrylic acid and/or inorganic salts thereof, preferably alkali metal salts, copolymers of isobutylene-maleic acid and/or inorganic salts thereof, preferably alkali metal salts, cellulose derivatives, preferably sodium carboxymethylcellulose, polyvinylpyrrolidones, starch grafted with acrylonitrile or with acrylic acid, polyvinylamines and mixtures thereof.

5. Multilayer film according to Claim 3 or 4, **characterized in that** the superabsorbent polymer has been embedded in the form of particles in a polymer matrix or has been bound by a polymeric binder.

6. Multilayer film according to any of Claims 3 to 5, **characterized in that** the proportion of the superabsorbent polymer in relation to the polymer matrix and, respectively, to the polymeric binder is from 1:10 to 10:1.

7. Multilayer film according to Claim 1, **characterized in that** the moisture-absorbing layer a) is based on foamed polyolefins, preferably foamed polyethylenes or polypropylenes.

8. Multilayer film according to any of Claims 1-7, **characterized in that** the moisture-permeable layer b) is based on at least one biodegradable polymer selected form the group comprising lactic acid homopolymers, lactic acid copolymers, polyhydroxyalkanoates, starch, cellulose, cellulose derivatives, polycaprolactones and polyvinyl alcohols.

9. Multilayer film according to any of Claims 1-8, **characterized in that** the layer b) comprises up to 30% by weight, based on the total weight of the layer b), of a synthetic non-biodegradable polymer.

10. Multilayer film according to any of Claims 1-9, **characterized in that** the laminate has also been bonded to at least one further backing layer c), preferably applied on the side that is closer to the layer a) of the laminate.

11. Multilayer film according to Claim 10, **characterized in that** the backing layer c) is based on a thermoplastic polymer, preferably on a water-vapour-barrier polyolefin, or on a polyester or polyamide, and optionally has been metallized, preferably with Al, and/or coated with SiOx, AlOx or paper.

12. Multilayer film according to Claim 10 or 11, **characterized in that** there is a gas-barrier layer d) arranged between the backing layer c) and the layer a).

13. Multilayer film according to Claim 12, **characterized in that** the gas-barrier layer d) is based on an ethylene/vinyl alcohol copolymer, on a polyvinylidene chloride, on a copolymer of vinylidene chloride, on a polyamide or on a mixture of at least two of the polymers mentioned.

14. Multilayer film according to Claim 12 or 13, **characterized in that** the gas-barrier layer d) has been bonded respectively to each adjacent layer by way of an adhesion-promoter layer.

15. Multilayer film according to Claims 12-14, **characterized in that** the gas-barrier layer d) is an oxygen- and water-vapour-barrier layer.

16. Multilayer film according to any of Claims 1-15, **characterized in that** the multilayer film has been biaxially oriented.

17. Packaging element, optionally thermoformed, made of a multilayer film according to any of Claims 1-16.

18. Packaging comprising a packaging element according to Claim 17, **characterized in that** the packaging element is a packaging bag, a packaging tray and/or a packaging cover.

19. Packaging according to Claim 18, **characterized in that** the packaging comprises, as packaged product, a moisture-emitting or moisture-sensitive product, and the heat-sealable surface layer b) is directed towards the packaged product.

20. Packaging according to Claim 19, **characterized in that** the moisture-emitting product is a food.

## Revendications

1. Feuille multicouche thermoformable, comprenant un composite stratifié constitué par
a) au moins une couche le cas échéant multicouche présentant une capacité d'absorption d'eau d'au moins 20 g/m² à base d'au moins un matériau synthétique absorbant de l'humidité et
b) une couche de surface perméable à l'humidité, thermoscellable, à base d'au moins un polymère biodégradable,
**caractérisée en ce que** la perméabilité à l'humidité de la couche b) ne repose pas sur un affaiblissement de la couche b) et
la proportion du polymère biodégradable dans la couche b) perméable à l'humidité est d'au moins 70% en poids et est tellement élevée que la couche b) présente une perméabilité à la vapeur d'eau d'au moins 100 g/m²*j (23C°/90% HR) (mesurée selon la norme ASTM F 1249).

2. Feuille multicouche selon la revendication 1, **caractérisée en ce que** la couche a) absorbant de l'humidité est à base d'au moins un homopolymère ou copolymère réticulé d'alkylène-imine, de préférence à base d'au moins au homopolymère ou copolymère réticulé d'éthylène-imine.

3. Feuille multicouche selon la revendication 1, **caractérisée en ce que** le matériau synthétique absorbant de l'humidité de la couche a) contient au moins un polymère superabsorbant.

4. Feuille multicouche selon la revendication 3, **caractérisée en ce que** le polymère superabsorbant est au moins un polymère choisi dans le groupe comprenant le poly(acide (méth)acrylique), qui se trouve au moins partiellement sous forme de sel inorganique, de préférence sous forme de sel de métal alcalin, les copolymères d'esters de l'acide (méth)acrylique et de l'acide (méth)acrylique et/ou leurs sels inorganiques, de préférence leurs sels de métal alcalin, les copolymères d'alcool vinylique et d'acide (méth)acrylique et/ou leurs sels inorganiques, de préférence leurs sels de métal alcalin, les copolymères d'isobutylène-acide maléique et/ou leurs sels inorganiques, de préférence leurs sels de métal alcalin, les dérivés de cellulose, de préférence la carboxyméthylcellulose sodique, les polyvinylpyrrolidones, l'amidon greffé d'acrylonitrile ou d'acide acrylique, les polyvinylamines et leurs mélanges.

5. Feuille multicouche selon la revendication 3 ou 4, **caractérisée en ce que** le polymère superabsorbant sous forme de particules est incorporé dans une matrice polymère ou lié par un liant polymère.

6. Feuille multicouche selon l'une quelconque des revendications 3 à 5, **caractérisée en ce que** la proportion de polymère superabsorbant par rapport à la matrice polymère ou par rapport au liant polymère est de 1:10 à 10:1.

7. Feuille multicouche selon la revendication 1, **caractérisée en ce que** la couche a) absorbant de l'humidité est à base de polyoléfines moussées, de préférence de polyéthylènes ou de polypropylènes moussés.

8. Feuille multicouche selon l'une quelconque des revendications 1-7, **caractérisée en ce que** la couche b) perméable à l'humidité est à base d'au moins un polymère biodégradable, choisi dans le groupe comprenant les homopolymères de l'acide lactique ou les copolymères de l'acide lactique, les polyhydroxyalcanoates, l'amidon, la cellulose, les dérivés de cellulose, les polycaprolactones et les poly(alcools vinyliques).

9. Feuille multicouche selon l'une quelconque des revendications 1-8, **caractérisée en ce que** la couche b) contient jusqu'à 30% en poids, par rapport au poids total de la couche b), d'un polymère synthétique, non biodégradable.

10. Feuille multicouche selon l'une quelconque des revendications 1-9, **caractérisée en ce que** le composite stratifié est encore pourvu d'au moins une autre couche support c), qui est de préférence appliquée sur la face la plus proche de la couche a) du composite stratifié.

11. Feuille multicouche selon la revendication 10, **caractérisée en ce que** la couche support c) est à base d'un polymère thermoplastique, de préférence d'une polyoléfine bloquant la vapeur d'eau, d'un polyester ou d'un polyamide et est de préférence métallisée, de préférence avec de l'Al, et/ou revêtue par SiOx, AlOx ou du papier.

12. Feuille multicouche selon la revendication 10 ou 11, **caractérisée en ce qu'**une couche d) formant une barrière aux gaz est disposée entre la couche support c) et la couche a).

13. Feuille multicouche selon la revendication 12, **caractérisée en ce que** la couche d) formant une barrière aux gaz est à base d'un copolymère d'éthylène/alcool vinylique, d'un poly(chlorure de vinylidène), d'un copolymère de chlorure de vinylidène, d'un polyamide ou d'un mélange d'au moins deux des polymères mentionnés.

14. Feuille multicouche selon la revendication 12 ou 13, **caractérisée en ce que** la couche d) formant une barrière aux gaz est reliée à la couche à chaque fois adjacente, à chaque fois via une couche de promoteur d'adhérence.

15. Feuille multicouche selon la revendication 12-14, **caractérisée en ce que** la couche d) formant une barrière aux gaz est une couche formant une barrière à l'oxygène et à la vapeur d'eau.

16. Feuille multicouche selon l'une quelconque des revendications 1-15, **caractérisée en ce que** la feuille multicouche est orientée de manière biaxiale.

17. Élément d'emballage, qui est le cas échéant thermoformé, constitué par une feuille multicouche selon l'une quelconque des revendications 1-16.

18. Emballage présentant un élément d'emballage selon la revendication 17, **caractérisé en ce que** l'élément d'emballage est un sac d'emballage, une barquette d'emballage et/ou un couvercle d'emballage.

19. Emballage selon la revendication 18, **caractérisé en ce que** l'emballage contient, comme produit emballé, un produit libérant de l'humidité ou sensible à l'humidité et la couche de surface b) thermoscellable est orientée vers le produit emballé.

20. Emballage selon la revendication 19, **caractérisé en ce que** le produit libérant de l'humidité est un aliment.
